# EUROPEAN PATENT SPECIFICATION

(11) **EP 4 711 264 B1**
(45) Date of publication and mention of the grant of the patent: **07.10.2026**
(21) Application number: 25200509.5
(22) Date of filing: 05.09.2025
(51) Int. Cl.: B63H 20/14, B63H 20/20, F16D 3/14

(54) **BOAT PROPULSION DEVICE AND BOAT**
BOOTSANTRIEBSVORRICHTUNG UND BOOT
DISPOSITIF DE PROPULSION DE BATEAU ET BATEAU

(30) Priority: 11.09.2024 JP 2024157182
(43) Date of publication of application: 18.03.2026
(73) Proprietor: Yamaha Hatsudoki Kabushiki Kaisha, Iwata-shi, Shizuoka 438-8501 (JP)
(72) Inventor: Taniguchi, Takafumi, Iwata-shi, Shizuoka, 4388501 (JP)
(74) Representative: Grünecker Patent- und Rechtsanwälte PartG mbB

(56) References cited:
- JP-B2- 4 499 876
- US-A1- 2022 306 258

## Description

The present invention relates to a boat propulsion device and a boat.

A known boat propulsion device includes an engine, an output shaft, an input pinion that rotates by the driving force of the engine, a forward gear and a reverse gear that mesh with the input pinion, and an actuator. The actuator reduces rattling noise by braking the forward gear or backward gear. The actuator is driven electrically, hydraulically, or pneumatically (see, e.g., JP 4499876 B). US 2022/306258 A1 constitutes further relevant prior art.

It is the object of the present invention to provide boat propulsion device and a boat wherein rattling noise of the boat propulsion device can be reduced.

According to the present invention said object is solved by boat propulsion device having the features of the independent claim 1 or a boat according to claim 15.

Preferred embodiments are laid down in the dependent claims.
(1) Accordingly, the boat propulsion device disclosed in this specification includes an engine, a propeller shaft, a transmission device, a cover, a shoe pin, a shoe, and an elastic member. The transmission device transmits the propulsion force of the engine to the propeller shaft. The transmission device includes a drive gear that rotates by the driving force of the engine and a driven gear that meshes with the drive gear. The cover covers the outer circumference of the propeller shaft. The shoe pin is arranged between the propeller shaft and the cover. The shoe pin rotates around the propeller shaft along with the rotation of the propeller shaft. The shoe is attached to the shoe pin and rotates around the shoe pin. The shoe includes a first part that is located on one side of the direction that intersects the radial direction of the propeller shaft with respect to the shoe pin, and a second part that is located on the other side of the direction that intersects the radial direction of the propeller shaft with respect to the shoe pin. The center of gravity of the shoe is located on the first part. The elastic member exerts a force that causes the second part and the cover to come into contact with each other.

This boat propulsion device can reduce rattling noise by applying friction to the propeller shaft through the action of the elastic member and can reduce the friction applied to the propeller shaft as the rotation speed of the propeller shaft increases.

(2) Another boat propulsion device disclosed in this specification includes an engine, a shaft, a transmission device, a cover, a shoe pin, a shoe, and an elastic member. The transmission device transmits the driving force of the engine to the shaft. The transmission device includes a drive gear that rotates by the driving force of the engine and a driven gear that meshes with the drive gear. The cover covers the outer circumference of the shaft. The shoe pin is arranged between the shaft and the cover. The shoe pin rotates around the shaft along with the rotation of the propeller shaft. The shoe is attached to the shoe pin and rotates around the shoe pin. The shoe includes a first part that is located on one side of the direction that intersects the radial direction of the shaft with respect to the shoe pin, and a second part that is located on the other side of the direction that intersects the radial direction of the shaft with respect to the shoe pin. The center of gravity of the shoe is located on the first part. The elastic member exerts a force to cause the second part and the cover to come into contact with each other.

This boat propulsion device can reduce rattling noise by applying friction to the shaft through the action of the elastic member, and can reduce the friction applied to the shaft as the rotation speed of the shaft increases.

The technology disclosed in this document can be implemented in various forms, e.g., in the form of a boat propulsion device or a boat equipped with a boat propulsion device and a boat body.

This boat propulsion device can reduce rattling noise by applying friction to the shaft through the action of the elastic member, and can reduce the friction applied to the shaft as the rotation speed of the shaft increases.

### BRIEF DESCRIPTION OF THE DRAWINGS

FIG. 1 is a perspective view schematically illustrating a configuration of a boat.
FIG. 2 is a side view schematically illustrating a configuration of an outboard motor.
FIG. 3 is an explanatory view illustrating a detailed configuration of the area around the propeller shaft.
FIG. 4 is an enlarged view of a part of FIG. 3.
FIG. 5 is a cross-sectional view of the outboard motor taken along line V-V in FIG. 3.
FIG. 6 is an explanatory view illustrating a detailed configuration of the area around the shoe in the status where the rotation speed of the engine body is relatively low.
FIG. 7 is an explanatory view illustrating a detailed configuration of the area around the shoe in the status where the rotation speed of the engine body is relatively high.

### DETAILED DESCRIPTION OF THE PREFERRED EMBODIMENTS

### A. EMBODIMENT:

### CONFIGURATION OF THE BOAT 10

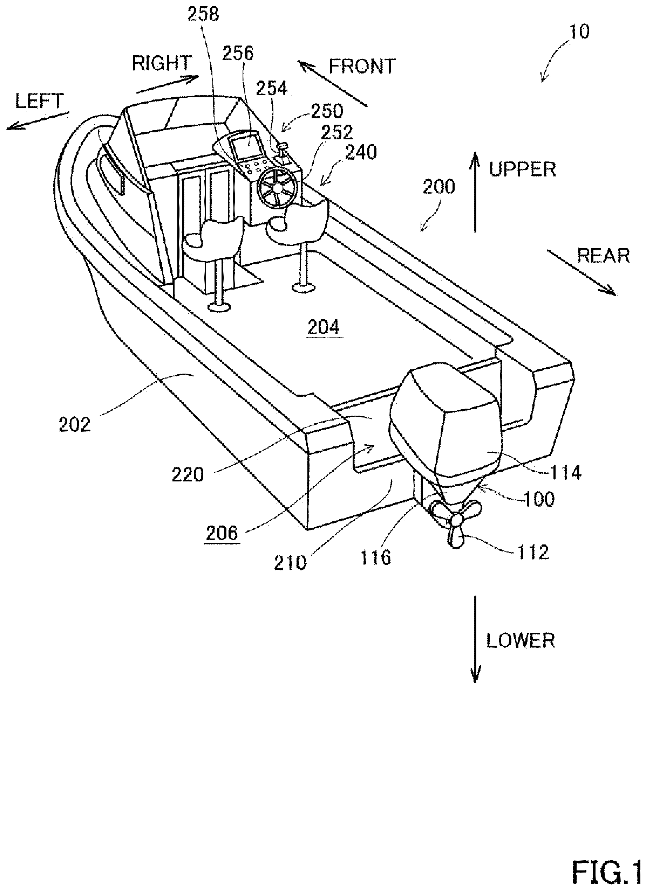

FIG. 1 is a perspective view schematically illustrating a configuration of a boat 10. FIG. 1 and other drawings described below show arrows representing each direction with respect to the position of the boat 10. More specifically, each drawing shows arrows representing the front direction (FRONT), rear direction (REAR), left direction (LEFT), right direction (RIGHT), upper direction (UPPER), and lower direction (LOWER), respectively. The front-rear direction, left-right direction, and upper-lower (vertical) direction are orthogonal to each other. It should be noted that, in this specification, axes, members, and the like, extending in the front-rear direction need not necessarily be parallel to the front-rear direction. Axes and members extending in the front-rear direction include axes and members that are inclined in the range of ±45° to the front-rear direction. Similarly, axes and members extending in the upper-lower direction include axes and members inclined within a range of ±45° to the upper-lower direction, and axes and members extending in the left-right direction include axes and members inclined within a range of ±45° to the left-right direction.

The boat 10 includes a boat body 200 and an outboard motor 100. In this embodiment, the boat 10 has only one outboard motor 100, but the boat 10 may have multiple outboard motors 100.

### CONFIGURATION OF BOAT BODY 200

The boat body 200 is a part of the boat 10 for occupants to ride. The boat body 200 includes a boat main body 202, a pilot seat 240, and a steering device 250. The boat main body 202 is provided with a living space 204. The pilot seat 240 is installed in the living space 204. The steering device 250 is installed near the pilot seat 240. The steering device 250 is a device for steering the boat. The steering device 250 includes, e.g., a steering wheel 252, a shift/throttle lever 254, a monitor 256, and an input device 258. The boat body 200 also includes a partition wall 220 and a transom 210. The partition wall 220 partitions the rear end of the living space 204. The transom 210 is located at the rear end of the boat body 200. In the front-rear direction, there is a space 206 between the transom 210 and the partition wall 220.

### CONFIGURATION OF OUTBOARD MOTOR 100

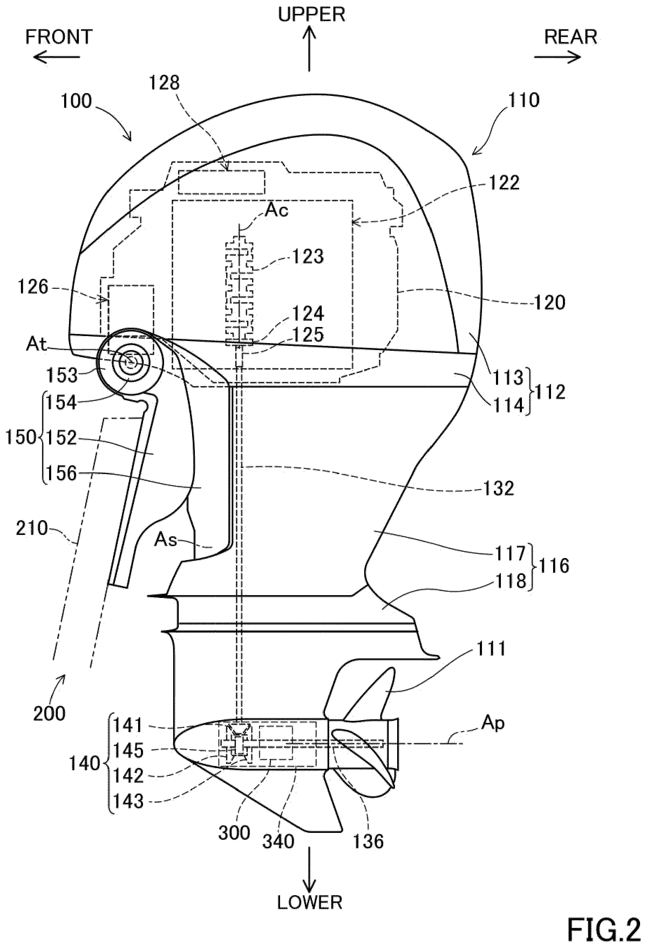

FIG. 2 is a side view schematically illustrating a configuration of an outboard motor 100. The following description refers to the outboard motor 100 in the reference attitude unless otherwise specified. The reference attitude is an attitude in which the rotation axis Ac of the crankshaft 123, which will be described later, extends in the upper-lower direction and the rotation axis Ap of the propeller shaft 136, which will be described later, extends in the front-rear direction. The front-rear direction, the left-right direction, and the upper-lower direction are respectively defined based on the outboard motor 100 in the reference attitude. The outboard motor 100 is an example of the boat propulsion device.

The outboard motor 100 is a device that generates thrust to propel the boat 10. The outboard motor 100 is attached to the transom 210 at the rear portion of the boat body 200. The outboard motor 100 includes an outboard motor main body 110 and a suspension device 150.

### CONFIGURATION OF OUTBOARD MOTOR MAIN BODY 110

The outboard motor main body 110 includes an engine assembly 120, a cowl 112, a casing 116, a drive shaft 132, a propeller shaft 136, a propeller 111, a transmission device 140, a silencer 300, and a housing 340.

The engine assembly 120 is an assembly of multiple parts, including an engine body (engine) 122. The engine assembly 120 includes, in addition to the engine body 122, intake system components 126 (e.g., throttle bodies, superchargers, and the like) and electrical components 128 (e.g., fuse boxes, ECUs, steering CUs, and the like). The engine assembly 120 is located relatively upper position in the outboard motor 100.

The engine body 122 is a prime mover that generates power. The engine body 122 is, e.g., an internal combustion engine. The engine body 122 includes a crankshaft 123 that converts the reciprocating motion of a piston, which is not shown in the figure, into rotational motion. The crankshaft 123 is arranged in an attitude in which its rotation axis Ac extends in an upper-lower direction. The crankshaft 123 includes a journal 124 and a spline 125. The journal 124 supports the crankshaft 123 itself in the bearing portion of the crankcase, which is not shown in the figure. The spline 125 is a portion with multiple vertical grooves formed for connecting with the drive shaft 132.

The cowl 112 is a housing body arranged in the upper portion of the outboard motor main body 110. The cowl 112 includes an upper cowl 113 and a lower cowl 114. The upper cowl 113 constitutes the upper portion of the cowl 112. The lower cowl 114 constitutes the lower portion of the cowl 112. The upper cowl 113 is removably attached to the lower cowl 114. The cowl 112 accommodates at least a portion of the engine assembly 120.

The casing 116 is a housing disposed in the lower portion of the outboard motor main body 110. The casing 116 is located below the cowl 112. The casing 116 includes an upper case 117 and a lower case 118. The upper case 117 constitutes the upper portion of the casing 116. The lower case 118 constitutes the lower portion of the casing 116.

The drive shaft 132 is a rod-shaped member that extends in the upper-lower direction. The upper end portion of the drive shaft 132 is connected to the spline 125 of the engine body 122. The drive shaft 132 extends downward from the connecting portion with the spline 125. The drive shaft 132 rotates together with the crankshaft 123 by the driving force of the engine body 122. At least a part of the drive shaft 132 is accommodated in the casing 116.

The propeller shaft 136 is a rod-shaped member. The propeller shaft 136 is arranged in an attitude in which its rotation axis Ap extends in the front-rear direction at a relatively lower part of the outboard motor main body 110. The front end portion of the propeller shaft 136 is accommodated in the lower case 118. The rear end portion of the propeller shaft 136 protrudes rearward from the lower case 118. The propeller shaft 136 is an example of the shaft.

The propeller 111 is a rotating member having multiple blades. The propeller 111 is attached to the rear end portion of the propeller shaft 136. The propeller 111 rotates together with the propeller shaft 136. The propeller 111 generates thrust for the boat 10 by rotating.

The transmission device 140 is a device that transmits the driving force of the engine body 122 to the propeller shaft 136. The transmission device 140 includes a first gear 141, a second gear 142, a third gear 143, and a dog clutch 145. The first gear 141 is an example of the drive gear. The second gear 142 and the third gear 143 are examples of the driven gears.

The first gear 141 is connected to the lower end portion of the drive shaft 132. The first gear 141 rotates together with the drive shaft 132 by the driving force of the engine body 122. The rotation axis of the first gear 141 is parallel to the rotation axis Ac of the crankshaft 123. In other words, the rotation axis of the first gear 141 is parallel to the upper-lower direction.

The second gear 142 and the third gear 143 are tubular gears that surround the front end portion of the propeller shaft 136. The rotation axes of the second gear 142 and the third gear 143 are parallel to the propeller shaft 136 rotation axis Ap. In other words, the rotation axes of the second gear 142 and the third gear 143 are parallel to the horizontal direction and perpendicular to the rotation axis of the first gear 141. The second gear 142 and the third gear 143 are each meshed with the first gear 141. This allows the driving force of the engine body 122 to be transmitted to the second gear 142 and the third gear 143 via the first gear 141.

The dog clutch 145 is arranged between the second gear 142 and the third gear 143 in the front-rear direction. The dog clutch 145 is tubular and surrounds the front end portion of the propeller shaft 136. The dog clutch 145 is connected to the propeller shaft 136, e.g., by a spline. The dog clutch 145 rotates together with the propeller shaft 136.

The dog clutch 145 is movable in the front-rear direction. More specifically, the dog clutch 145 is movable between a first connected position connecting with the second gear 142, a second connected position connecting with the third gear 143, and a disconnected position away from the second gear 142 and the third gear 143. When the dog clutch 145 is in the first connected position, the rotation of the second gear 142 is transmitted to the dog clutch 145, and the rotation of the dog clutch 145 is transmitted to the propeller shaft 136. As a result, the propeller 111 rotates in the direction that moves the boat 10 forward. When the dog clutch 145 is in the second connected position, the rotation of the third gear 143 is transmitted to the dog clutch 145, and the rotation of the dog clutch 145 is transmitted to the propeller shaft 136. As a result, the propeller 111 rotates in the direction that moves the boat 10 backward. When the dog clutch 145 is in the disconnected position, the rotation of the first gear 141 and second gear 142 is not transmitted to the dog clutch 145. As a result, the propeller 111 does not receive the driving force of the engine body 122. In other words, when the dog clutch 145 is in the disconnected position, the outboard motor 100 is in a neutral state.

The silencer 300 and the housing 340 are located relatively lower position in the outboard motor 100. The silencer 300 and housing 340 are accommodated in the lower case 118. Details of the silencer 300 and the housing 340 are described later.

### CONFIGURATION OF SUSPENSION DEVICE 150

The suspension device 150 is a device to suspend the outboard motor main body 110 to the boat body 200. The suspension device 150 includes a pair of left and right clamp brackets 152, a tilt shaft 154, and a swivel bracket 156.

The pair of left and right clamp brackets 152 are disposed behind the boat body 200 in a state separated from each other in the left-right direction and are fixed to the transom 210 of the boat body 200 by using, e.g., bolts. Each clamp bracket 152 has a tubular supporting portion 153 provided with a through-hole extending in the left-right direction.

The tilt shaft 154 is a rod-shaped member and is rotatably supported within the through-hole in the supporting portion 153 of the clamp bracket 152. The tilt axis At, which is the centerline of the tilt shaft 154, constitutes the horizontal (left-right) axis of the tilting action of the outboard motor 100.

The swivel bracket 156 is disposed so as to be sandwiched between the pair of clamp brackets 152 and is supported by the supporting portion 153 of the clamp brackets 152 via the tilt shaft 154 so as to be rotatable around the tilt axis At. The swivel bracket 156 is driven to rotate about the tilt axis At with respect to the clamp bracket 152 by a tilt device (not shown) that includes an actuator, such as a hydraulic cylinder, for example.

When the swivel bracket 156 rotates about the tilt axis At with respect to the clamp bracket 152, the outboard motor main body 110 supported by the swivel bracket 156 also rotates about the tilt axis At. This achieves the tilting action of rotating the outboard motor main body 110 in the upper-lower direction with respect to the boat body 200. By this tilting action, the outboard motor 100 can change the angle of the outboard motor main body 110 around the tilt axis At in the range from the tilt-down state in which the propeller 111 is disposed under the water (the state in which the outboard motor 100 is in the reference attitude) to the tilt-up state in which the propeller 111 is disposed above the water surface. Trimming action for adjusting the attitude of the boat 10 during travel can also be performed by adjusting the angle around the tilt axis At of the outboard motor main body 110.

### DETAILED CONFIGURATION AROUND PROPELLER SHAFT 136

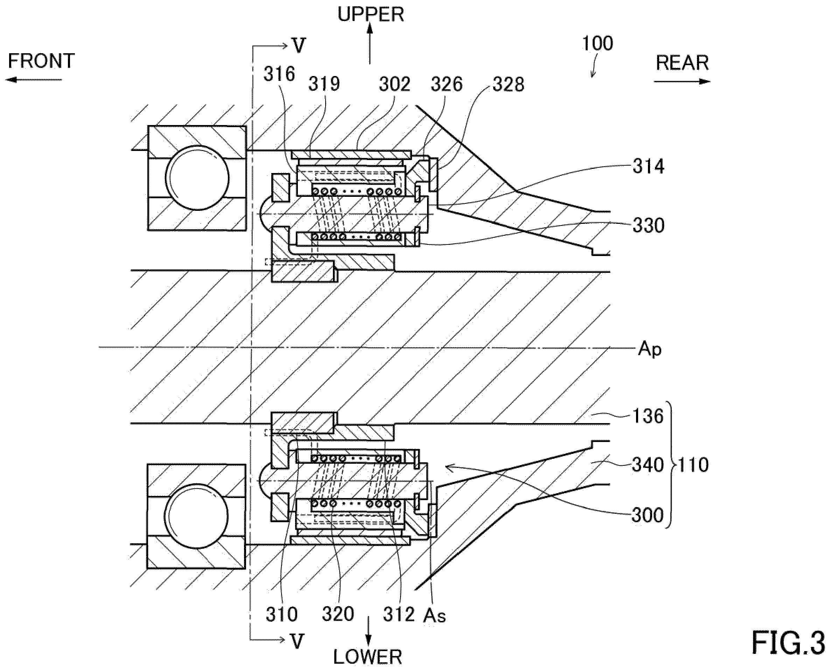

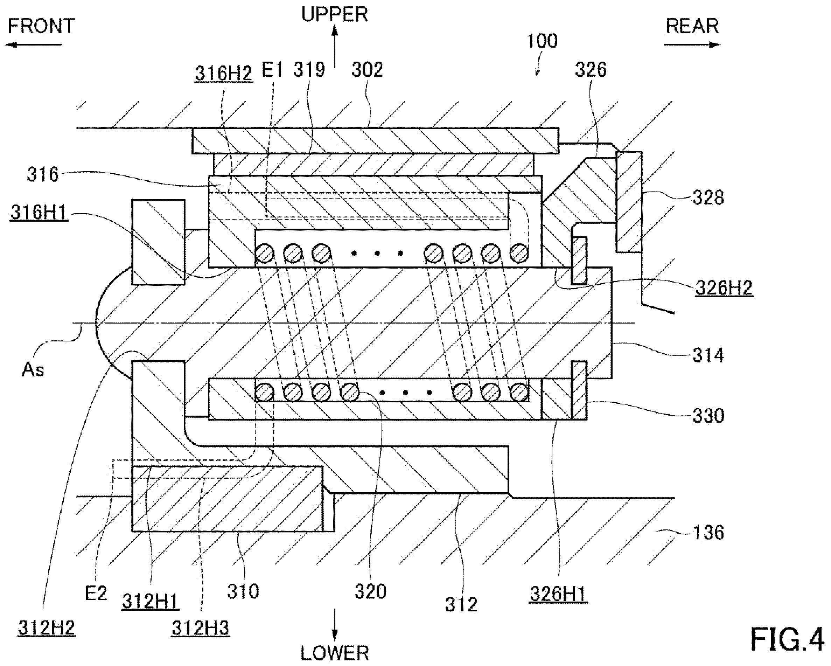

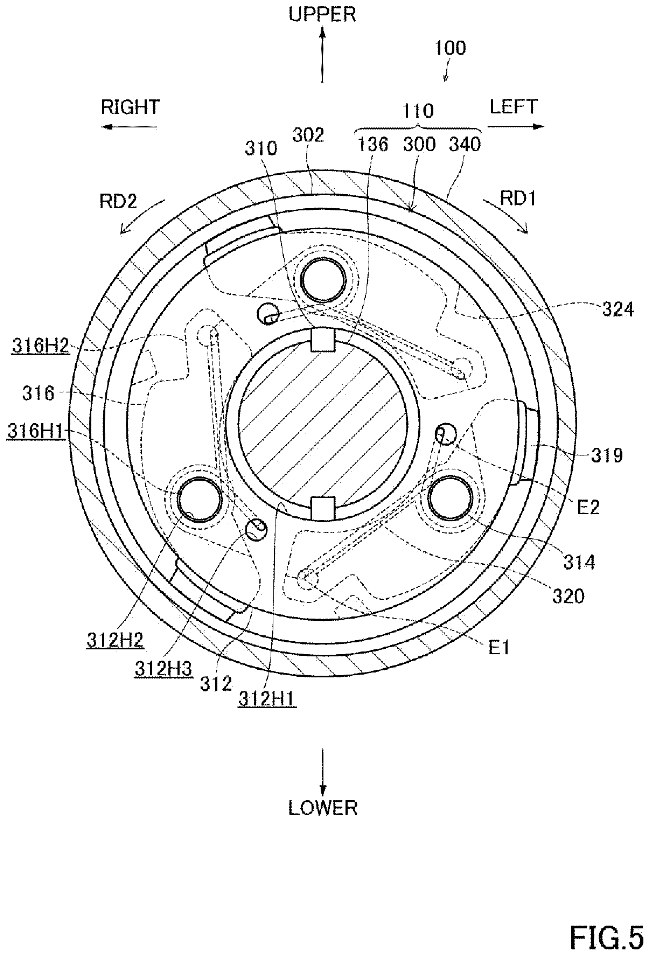

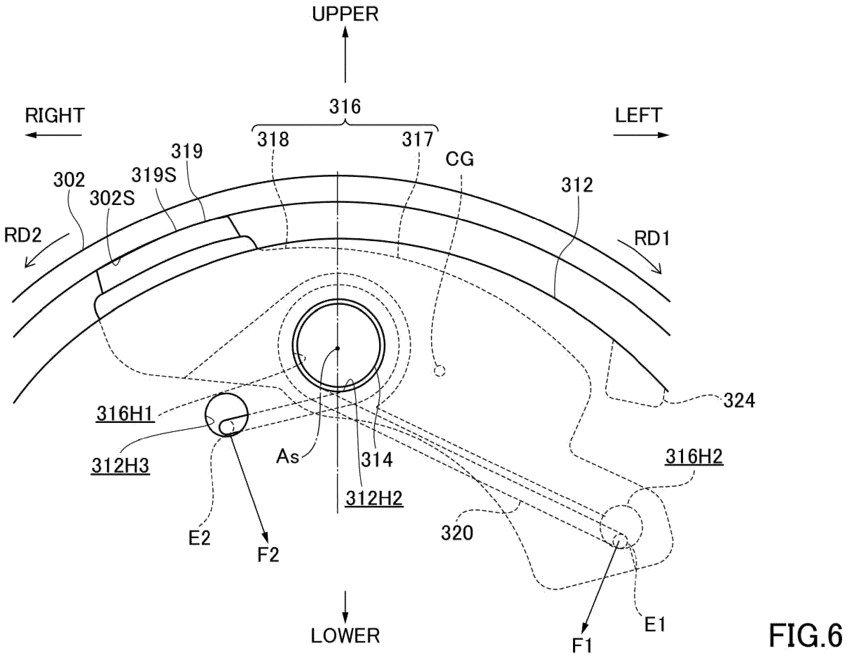

FIG. 3 is an explanatory view illustrating a detailed configuration of the area around the propeller shaft 136. FIG. 4 is an enlarged view of a part of FIG. 3. FIG. 5 is a cross-sectional view of the outboard motor 100 taken along line V-V in FIG. 3. FIG. 6 is an explanatory view illustrating a detailed configuration of the area around the shoe 316 in the status where the rotation speed of the engine body 122 is relatively low. FIGS. 3 and 4 show a cross-section of the outboard motor 100 perpendicular to the left-right direction. FIGS. 5 and 6 show cross-sections of the outboard motor 100 perpendicular to the front-rear direction. In FIGS. 5 and 6, the first rotating direction RD1 and the second rotating direction RD2 are shown as the rotating directions of the propeller shaft 136. The first rotating direction RD1 is the clockwise direction when viewed from the front, and the second rotating direction RD2 is the counterclockwise direction when viewed from the front.

The silencer 300 is an assembly of components arranged around the propeller shaft 136. As will be described later, the silencer 300 reduces the rattling noise that occurs between the first gear 141 and the second gear 142, and the rattling noise that occurs between the first gear 141 and the third gear 143, by applying friction to the propeller shaft 136. The housing 340 accommodates the silencer 300. In this embodiment, oil is stored inside the housing 340. The housing 340 is an example of the case.

The silencer 300 includes a cover 302, a key 310, a base 312, a shoe pin 314, a shoe 316, a torsion spring 320, a stopper 324, a shoe plate 326, a thrust washer 328, and a clip 330.

The cover 302 is a tubular member that extends in the front-rear direction. The cover 302 covers the outer circumference of the propeller shaft 136. The shape of the inner circumferential surface 302S of the cover 302 when viewed in the axial direction of the propeller shaft 136 is circular.

The key 310 is a prismatic member that extends in the front-rear direction. The key 310 is disposed between the propeller shaft 136 and the cover 302 in the radial direction of the propeller shaft 136. The key 310 is connected to a portion of the surface of the propeller shaft 136 that faces the outer side in the radial direction of the propeller shaft 136. The key 310 rotates together with the propeller shaft 136. In this embodiment, the outboard motor 100 has two keys 310 arranged at positions that differ from each other in the rotating direction of the propeller shaft 136.

The base 312 is a member having a hole 312H1 formed in the center. The base 312 is arranged between the propeller shaft 136 and the cover 302 in the radial direction of the propeller shaft 136. The propeller shaft 136 is arranged in the hole 312H1 of the base 312. The base 312 surrounds the propeller shaft 136. A portion of the surface of the base 312 facing the hole 312H1 is connected to the key 310. The base 312 rotates around the propeller shaft 136 together with the key 310 along with the rotation of the propeller shaft 136. In addition, the base 312 is provided with holes 312H2 and 312H3 formed between the hole 312H1 in the radial direction of the propeller shaft 136 and the outer edge of the base 312. In this embodiment, the base 312 has three holes 312H2 that are located at different positions in the rotating direction of the propeller shaft 136, and three holes 312H3 that are located at different positions in the rotating direction of the propeller shaft 136.

The shoe pin 314 is a rod-shaped member that extends in the front-rear direction. In this embodiment, the outboard motor 100 is provided with three shoe pins 314 arranged at positions that differ from each other in the rotating direction of the propeller shaft 136. The shoe pins 314 are disposed between the propeller shaft 136 and the cover 302. The front end portion of the shoe pin 314 is inserted into the hole 312H2 of the base 312. The shoe pin 314 is connected to the surface of the base 312 facing the hole 312H2. The shoe pin 314 rotates around the propeller shaft 136 together with the base 312 along with the rotation of the propeller shaft 136.

The shoe 316 is a member that extends in the rotating direction of the propeller shaft 136 when viewed in the front-rear direction. The shoe 316 is disposed between the propeller shaft 136 and the cover 302 in the radial direction of the propeller shaft 136. In this embodiment, the outboard motor 100 has three shoes 316 disposed at positions that are different from each other in the rotating direction of the propeller shaft 136. The three shoes 316 are arranged at equal intervals in the rotating direction of the propeller shaft 136.

The shoe 316 is provided with a hole 316H1 formed near the center of the rotating direction of the propeller shaft 136 and a hole 316H2 formed at the end portion on the first rotating direction RD1 side in the rotating direction of the propeller shaft 136 with respect to the hole 316H1. The hole 316H1 of the shoe 316 is inserted with a shoe pin 314. The shoe 316 is attached to the shoe pin 314. The shoe 316 rotates around the propeller shaft 136 together with the shoe pin 314 along with the rotation of the propeller shaft 136. In addition, the shoe 316 rotates around the shoe pin 314. The rotation axis As of the shoe 316 around the shoe pin 314 coincides with the center axis of the shoe pin 314. The rotation axis As of the shoe 316 is parallel to the rotation axis Ap of the propeller shaft 136.

The configuration of the shoe 316 is explained in detail using FIG. 6. The shoe 316 has a first part 317 and a second part 318. The first part 317 is the part that is located on one side of the direction (circumferential direction) that intersects the radial direction of the propeller shaft 136 with respect to the center axis of the shoe pin 314 when the outboard motor 100 is stopped. More specifically, the first part 317 is the part that is located on the first rotating direction RD1 side with respect to the center axis of the shoe pin 314 when the outboard motor 100 is stopped. The second part 318 is the part that is located on the other side of the direction (circumferential direction) that intersects the radial direction of the propeller shaft 136 with respect to the center axis of the shoe pin 314 when the outboard motor 100 is stopped. More specifically, the second part 318 is the part that is located on the second rotating direction RD2 side with respect to the center axis of the shoe pin 314 when the outboard motor 100 is stopped. The shoe 316 is disposed at a position where the second part 318 can contact the cover 302 by rotating the shoe 316 around the shoe pin 314 in the radial direction of the propeller shaft 136.

The center of gravity CG of the shoe 316 is located in the first part 317. In this embodiment, the shoe 316 includes a first metal and a second metal having a specific gravity lower than that of the first metal. The first metal is, e.g., iron, and the second metal is, e.g., aluminum. The first metal is contained in the first part 317 in greater quantity than in the second part 318. In other words, in this embodiment, the center of gravity CG of the shoe 316 is located in the first part 317 because the first metal, which has a relatively high specific gravity, is present in the first part 317 in greater quantity than in the second part 318.

The second part 318 of the shoe 316 is provided with a friction material 319. The friction material 319 is provided on the surface of the second part 318 that faces the outer side in the radial direction of the propeller shaft 136. The friction material 319 is provided at a portion of the second part 318 that contacts the cover 302. In other words, the outer circumferential surface 319S of the friction material 319 is the contact surface with the cover 302. The shape of the outer circumferential surface 319S of the friction material 319 when viewed in the axial direction of the propeller shaft 136 is arcuate.

The torsion spring 320 is wound around the shoe pin 314. The torsion spring 320 is a coil-shaped member. The center axis of the torsion spring 320 coincides with the center axis of the shoe pin 314 and the rotation axis As. The first end E1 of the torsion spring 320 is inserted into the hole 316H2 of the shoe 316. The first end E1 of the torsion spring 320 is connected to the first part 317 of the shoe 316. The second end E2 of the torsion spring 320 is inserted into the hole 312H3. The second end E2 of the torsion spring 320 is connected to the base 312. In other words, the second end E2 of the torsion spring 320 is connected to the other part that rotates around the propeller shaft 136 together with the shoe pin 314 of the outboard motor 100. The torsion spring 320 is an example of the elastic member.

The stopper 324 is attached to the base 312. The base 312 is disposed between the first part 317 of the shoe 316 and the cover 302 in the radial direction of the propeller shaft 136.

The shoe plate 326 is a plate having a hole 326H1 formed in the center. The hole 326H1 of the shoe plate 326 surrounds the propeller shaft 136. The shoe plate 326 is provided with a hole 326H2 formed between the hole 326H1 and the outer edge of the shoe plate 326. In this embodiment, the shoe plate 326 is provided with three holes 326H2 formed at equal intervals in the rotating direction of the propeller shaft 136. The rear end portion of the shoe pin 314 is inserted into the hole 326H2 of the shoe plate 326. The surface of the shoe plate 326 facing the hole 326H2 is connected to the shoe pin 314.

The thrust washer 328 is disposed between the shoe plate 326 and the housing 340 in the front-rear direction. The thrust washer 328 contacts the shoe plate 326. Since the shoe plate 326 contacts the thrust washer 328, friction is reduced when it rotates along with the rotation of the propeller shaft 136.

The clip 330 is disposed rearwardly of the shoe plate 326. The clip 330 is in contact with the shoe pin 314 and the shoe plate 326, respectively, and fixes the shoe pin 314 to the shoe plate 326.

### ACTION OF SILENCER 300

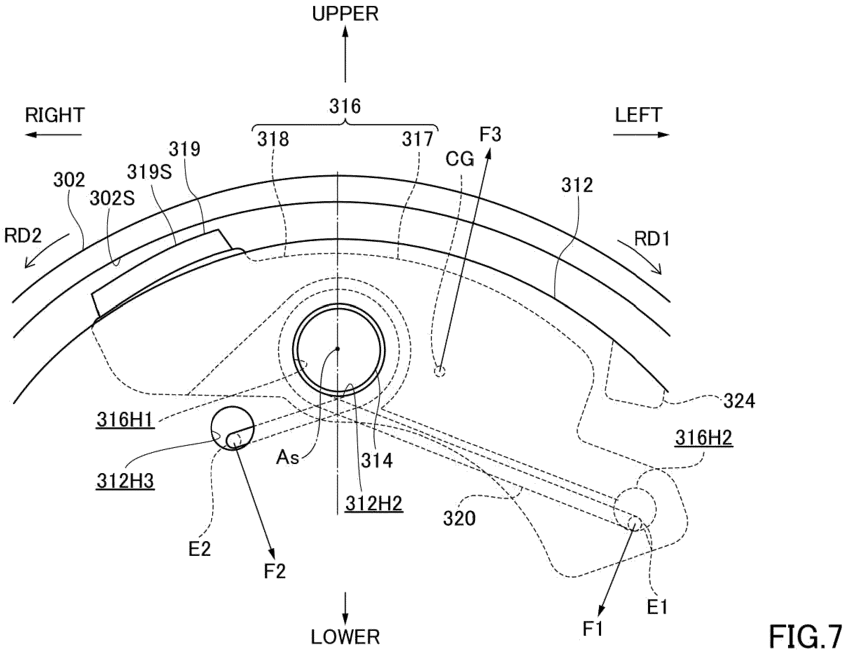

FIG. 7 is an explanatory view illustrating a detailed configuration of the area around the shoe 316 in the status where the rotation speed of the engine body 122 is relatively high. The action of the silencer 300 will now be explained in detail with reference to FIGS. 6 and 7.

First, the action of the silencer 300 when the rotation speed of the engine body 122 is relatively low will be explained with reference to FIG. 6. An elastic force is acting on the torsion spring 320 to bring the first end E1 and the second end E2 closer together. More specifically, an elastic force F1 in a clockwise direction with respect to the center axis (i.e., rotation axis As) of the torsion spring 320 acts on the first end E1 of the torsion spring 320. On the other hand, an elastic force F2 in a counterclockwise direction with respect to the center axis of the torsion spring 320 acts on the second end E2 of the torsion spring 320.

As described above, the second end E2 of the torsion spring 320 is connected to the hole 312H3 of the base 312, and the first end E1 of the torsion spring 320 is connected to the hole 316H2 of the shoe 316. Therefore, the torsion spring 320 generates a moment that rotates the shoe 316 clockwise around the center axis of the shoe pin 314 by the elastic force F1 acting on the first end E1. In other words, the torsion spring 320 exerts a force that causes the second part 318 of the shoe 316 and the cover 302 to come into contact with each other. Thus, for example, when the rotation speed of the engine body 122 is relatively low, when the engine body 122 is not rotating, or when the rotation of the engine body 122 is not transmitted to the propeller shaft 136 (i.e., in the neutral state), the friction material 319 of the second part 318 contacts the cover 302. The shoe 316 exerts friction on the propeller shaft 136 by pressing the second part 318 against the cover 302.

The outboard motor 100 is likely to generate rattling noise when the rotation speed of the engine body 122 is relatively low. Specifically, e.g., when the rotation speed of the first gear 141 changes due to a change in the rotation speed of the engine body 122, the rotation speed of the second gear 142 and the third gear 143 cannot follow the rotation speed of the first gear 141, which causes the tooth surfaces to contact between the first gear 141 and the second gear 142 and between the first gear 141 and the third gear 143, causing a rattling noise. In the embodiment of the outboard motor 100, by applying friction to the propeller shaft 136 when the rotation speed of the engine body 122 is relatively low, the rotation speed of the second gear 142 and the third gear 143 becomes easier to follow the rotation speed of the first gear 141. This reduces the rattling noise that occurs between the first gear 141 and the second gear 142, and the rattling noise that occurs between the first gear 141 and the third gear 143.

Next, the action of the silencer 300 when the rotation speed of the engine body 122 is relatively high will be explained with reference to FIG. 7. As in the state where the rotation speed of the engine body 122 is relatively low, the elastic force F1 in a clockwise direction with respect to the center axis of the torsion spring 320 acts on the first end E1 of the torsion spring 320, and the elastic force F2 in a counterclockwise direction with respect to the center axis of the torsion spring 320 acts on the second end E2 of the torsion spring 320. Therefore, when the rotation speed of the engine body 122 is relatively high, the torsion spring 320 also generates a moment that rotates the shoe 316 clockwise around the center axis of the shoe pin 314 by the elastic force F1 acting on the first end E1.

As described above, the shoe 316 rotates around the propeller shaft 136 together with the shoe pin 314 along with the rotation of the propeller shaft 136. Therefore, the shoe 316 is subjected to the centrifugal force F3 generated by the rotation of the propeller shaft 136. The centrifugal force F3 does not mean the centrifugal force to which only the first part 317 of the shoe 316 is subjected, but the centrifugal force to which the entire shoe 316, including the second part 318, is subjected. Also, as mentioned above, the shoe 316 rotates around the shoe pin 314. The center of gravity CG of the shoe 316 is located in the first part 317. Therefore, when the shoe 316 is subjected to the centrifugal force F3 generated by the rotation of the propeller shaft 136, a moment is generated that rotates the shoe 316 counterclockwise around the center axis of the shoe pin 314. If the moment generated by the centrifugal force F3, which rotates the shoe 316 counterclockwise around the center axis of the shoe pin 314, exceeds the moment generated by the elastic force F1, which rotates the shoe 316 clockwise around the center axis of the shoe pin 314, the first part 317 will be displaced outwardly in the radial direction of the propeller shaft 136. In other words, when the rotation speed of the propeller shaft 136 exceeds a certain value, the friction material 319 of the second part 318 moves away from the cover 302. When the friction material 319 moves away from the cover 302, the entire outer circumferential surface 319S moves away from the cover 302 at the same time.

The outboard motor 100 is less likely to generate rattling noise when the rotation speed of the engine body 122 is relatively high. In the outboard motor 100 of this embodiment, when the rotation speed of the propeller shaft 136 exceeds a certain value, the friction applied to the propeller shaft 136 is reduced, thereby reducing the occurrence of rattling noise and reducing the friction applied to the propeller shaft 136 along with the increase in the rotation speed of the propeller shaft 136.

The rotation speed of the engine body 122 to cause the second part 318 of the shoe 316 to move away from the cover 302 can be set to any value by adjusting the mass of the shoe 316, the position of the center of gravity CG of the shoe 316, and the like. In this embodiment, the second part 318 of the shoe 316 comes into contact with the cover 302 when the rotation speed of the engine body 122 is lower than the trolling rotation speed, and moves away from the cover 302 when the rotation speed of the engine body 122 is higher than the trolling rotation speed.

In addition, the stopper 324 is arranged between the first part 317 of the shoe 316 and the cover 302. Therefore, in this embodiment, when the rotation speed of the engine body 122 is higher than the trolling rotation speed, none of the parts of the shoe 316 come into contact with the cover 302.

### B. MODIFICATIONS:

The techniques disclosed herein are not limited to the above-described preferred embodiment and may be modified in various forms according to the following modifications.

The configuration of the boat 10 and the outboard motor 100 in the above-mentioned embodiment is just one example, and can be modified in various ways. For example, in the above embodiment, the boat propulsion device is exemplified by the outboard motor 100, the boat propulsion device may also be an inboard motor or a jet propeller.

In the above embodiment, the outboard motor 100 has only the engine body 122 as its drive source, but the boat propulsion device may also be a hybrid type that has a motor in addition to the engine.

In the above embodiment, the rotation axis As of the shoe 316 is parallel to the rotation axis Ap of the propeller shaft 136, but the rotation axis of the shoe does not necessarily have to be parallel to the rotation axis of the propeller shaft.

In the above embodiment, the friction material 319 is provided in the second part 318, but it is not necessarily required to provide the friction material.

In the above embodiment, the shape of the inner circumferential surface 302S of the cover 302 when viewed in the axial direction of the propeller shaft 136 is circular, but the shape of the inner circumferential surface of the cover when viewed in the axial direction of the propeller shaft may be any shape. In the above embodiment, the shape of the outer circumferential surface 319S of the friction material 319 when viewed in the axial direction of the propeller shaft 136 is arcuate, but the shape of the outer circumferential surface of the friction material when viewed in the axial direction of the propeller shaft may be any shape.

In the above embodiment, the entire outer circumferential surface 319S moves away from the cover 302 at the same time, but the contact surface of the friction material with the cover may gradually moves away from the cover 302 as the rotation speed of the engine body 122 increases.

In the above embodiment, the shoe 316 contains the first metal and the second metal, but the shoe does not necessarily have to contain the first metal and the second metal. In other words, the center of gravity of the shoe may be adjusted by changing the shape of the shoe, e.g., or by changing the density distribution of the shoe in the rotating direction of the propeller shaft.

In the above embodiment, the outboard motor 100 is provided with three shoes 316, but the boat propulsion device only needs to be provided with at least one shoe.

In the above embodiment, the outboard motor 100 is provided with the torsion spring 320 as an elastic member, but the boat propulsion device may be provided with an elastic member other than the torsion spring.

In the above embodiment, oil is stored inside the housing 340, but the inside of the case may not be stored with oil.

In the above embodiment, the shaft is exemplified by the propeller shaft 136, but the shaft may be a shaft other than a propeller shaft.

## Claims

1. A boat propulsion device (100), comprising:
an engine (122) configured to generate a propulsion force;
a shaft (136) configured to rotate;
a transmission device (140) that is configured to transmit the propulsion force of the engine (122) to the shaft (136), comprising:
a drive gear (141) that is configured to rotate by the propulsion force of the engine (122); and
a driven gear (142, 143) that meshes with the drive gear (141);
a cover (302) that covers the outer circumference of the shaft (136);
**characterised in that** the transmission device (140) further comprises a shoe pin (314) that is arranged between the shaft (136) and the cover (302) and is configured to rotate around the shaft (136) along with the rotation of the shaft (136); a shoe (316) that is attached to the shoe pin (314) and is configured to rotate around the shoe pin (314), comprising:
a first part (317) located on one side of the direction that intersects the radial direction of the shaft (136) with respect to the shoe pin (314); and
a second part (318) located on the other side of the direction that intersects the radial direction of the shaft (136) with respect to the shoe pin (314), wherein
a center of gravity (CG) of the shoe (316) is located in the first part (317); and an elastic member (320) that is configured to exert a force that causes the second part (318) and the cover (302) to come into contact with each other.

2. The boat propulsion device (100) according to claim 1, wherein the shaft is a propeller shaft (136).

3. The boat propulsion device (100) according to claim 2, wherein the second part (318) is configured to move away from the cover (302) by the shoe (316) being subjected to a centrifugal force generated by the rotation of the propeller shaft (136).

4. The boat propulsion device (100) according to claim 3, wherein the second part (318) is configured to move away from the cover (302) when a rotation speed of the engine (122) is greater than a trolling rotation speed of the engine (122).

5. The boat propulsion device (100) according to any one of claims 2 to 4, wherein a rotation axis (As) of the shoe (316) is parallel to a rotation axis (Ap) of the propeller shaft (136).

6. The boat propulsion device (100) according to any one of claims 2 to 5, wherein the second part (318) is provided with a friction material (319) at a portion that contacts the cover (302).

7. The boat propulsion device (100) according to claim 6, wherein an inner circumferential surface (302S) of the cover (302) when viewed in an axial direction of the propeller shaft (136) is circular, and
an outer circumferential surface (319S) of the friction material (319) when viewed in the axial direction of the propeller shaft (136) is arcuate.

8. The boat propulsion device (100) according to claim 7, wherein the friction material (319) has a contact surface with the cover (302), and
when the friction material (319) moves away from the cover (302) due to the shoe (316) rotating around the shoe pin (314), the entire contact surface moves away from the cover (302) at the same time.

9. The boat propulsion device (100) according to any one of claims 2 to 8, wherein the shoe (316) includes a first metal and a second metal having a lower specific gravity than the first metal, and
the first metal is contained in the first part (317) in greater quantity than in the second part (318).

10. The boat propulsion device (100) according to any one of claims 2 to 9, wherein the elastic member is a torsion spring (320),
the torsion spring (320) is wound around the shoe pin (314),
a first end (E1) of the torsion spring (320) is connected to the shoe (316), and
a second end (E2) of the torsion spring (320) is connected to another part (312) that is configured to rotate around the propeller shaft (136) along with the shoe pin (314) in the boat propulsion device (100).

11. The boat propulsion device (100) according to any one of claims 2 to 10, further comprising:
a drive shaft (132) that is configured to rotate by the propulsion force of the engine (122), wherein
the drive gear (141) is configured to rotate together with the drive shaft (132),
the transmission device (140) further comprises a dog clutch (145) that is movable between a connected position that connects with the driven gear (142, 143) and a disconnected position that moves away from the driven gear (142, 143), and rotates together with the propeller shaft (136).

12. The boat propulsion device (100) according to any one of claims 2 to 11, further comprising:
a shoe plate (326) that is connected with the shoe pin (314).

13. The boat propulsion device (100) according to any one of claims 2 to 12, further comprising:
a stopper (324) arranged between the first part (317) and the cover (302).

14. The boat propulsion device (100) according to any one of claims 2 to 13, further comprising:
a case (340) that accommodates the cover (302), the shoe pin (314), the shoe (316), and the elastic member (320), wherein oil is stored inside the case (340).

15. A boat (10), comprising:
a boat body (200); and
a boat propulsion device (100) according to any one of claims 2 to 14 attached to the rear portion (210) of the boat body (200).

## Patentansprüche

1. Eine Bootsantriebsvorrichtung (100), die umfasst:
einen Motor (122), der so konfiguriert ist, um eine Antriebskraft zu erzeugen;
eine Welle (136), die so konfiguriert ist, um sich zu drehen;
eine Getriebevorrichtung (140), die so konfiguriert ist, um die Antriebskraft des Motors (122) auf die Welle (136) zu übertragen, umfasst:
ein Antriebszahnrad (141), das konfiguriert ist, um sich durch die Antriebskraft des Motors (122) zu drehen; und
ein angetriebenes Zahnrad (142, 143), das mit dem Antriebszahnrad (141) in Eingriff steht;
eine Abdeckung (302), die den Außenumfang der Welle (136) abdeckt;
**dadurch gekennzeichnet, dass** die Getriebevorrichtung (140) ferner umfasst
einen Schuhstift (314), der zwischen der Welle (136) und der Abdeckung (302) angeordnet ist und so konfiguriert ist, dass er sich zusammen mit der Drehung der Welle (136) um die Welle (136) dreht;
einen Schuh (316), der an dem Schuhstift (314) befestigt ist und so konfiguriert ist, um sich um den Schuhstift (314) zu drehen, umfasst: einen ersten Teil (317), der sich auf einer Seite der Richtung befindet, welche die Radialrichtung der Welle (136) in Bezug auf den Schuhstift (314) schneidet; und
einen zweiten Teil (318), der auf der anderen Seite der Richtung angeordnet ist, welche die Radialrichtung der Welle (136) in Bezug auf den Schuhstift (314) schneidet, wobei
ein Schwerpunkt (CG) des Schuhs (316) im ersten Teil (317) angeordnet ist; und
ein elastisches Element (320), das konfiguriert ist, um eine Kraft auszuführen, die bewirkt, dass der zweite Teil (318) und die Abdeckung (302) miteinander in Kontakt kommen.

2. Die Bootsantriebsvorrichtung (100) gemäß Anspruch 1, wobei die Welle eine Propellerwelle (136) ist.

3. Die Bootsantriebsvorrichtung (100) gemäß Anspruch 2, wobei der zweite Teil (318) so konfiguriert ist, um sich von der Abdeckung (302) weg zu bewegen, indem der Schuh (316) einer durch die Drehung der Propellerwelle (136) erzeugten Zentrifugalkraft ausgesetzt wird.

4. Die Bootsantriebsvorrichtung (100) gemäß Anspruch 3, wobei das zweite Teil (318) so konfiguriert ist, um sich von der Abdeckung (302) wegzubewegen, wenn eine Drehzahl des Motors (122) größer ist als eine Trolling-Drehzahl des Motors (122).

5. Die Bootsantriebsvorrichtung (100) gemäß irgendeinem der Ansprüche 2 bis 4, wobei eine Drehachse (As) des Schuhs (316) parallel zu einer Drehachse (Ap) der Propellerwelle (136) verläuft.

6. Die Bootsantriebsvorrichtung (100) gemäß irgendeinem der Ansprüche 2 bis 5, wobei der zweite Teil (318) an einem Abschnitt, der mit der Abdeckung (302) in Kontakt steht, mit einem Reibmaterial (319) versehen ist.

7. Die Bootsantriebsvorrichtung (100) gemäß Anspruch 6, wobei eine innere Umfangsfläche (302S) der Abdeckung (302) in axialer Richtung der Propellerwelle (136) betrachtet kreisförmig ist und
eine äußere Umfangsfläche (319S) des Reibmaterials (319) in axialer Richtung der Propellerwelle (136) betrachtet bogenförmig ist.

8. Die Bootsantriebsvorrichtung (100) gemäß Anspruch 7, wobei das Reibmaterial (319) eine Kontaktfläche mit der Abdeckung (302) hat und
wenn sich das Reibmaterial (319) aufgrund der Drehung des Schuhs (316) um den Schuhstift (314) von der Abdeckung (302) wegbewegt, sich die gesamte Kontaktfläche gleichzeitig von der Abdeckung (302) wegbewegt.

9. Die Bootsantriebsvorrichtung (100) gemäß irgendeinem der Ansprüche 2 bis 8, wobei der Schuh (316) ein erstes Metall und ein zweites Metall mit einem geringeren spezifischen Gewicht als das erste Metall enthält, und
das erste Metall im ersten Teil (317) in größerer Menge enthalten ist als im zweiten Teil (318).

10. Die Bootsantriebsvorrichtung (100) gemäß irgendeinem der Ansprüche 2 bis 9, wobei das elastische Element eine Torsionsfeder (320) ist,
die Torsionsfeder (320) um den Schuhstift (314) gewickelt ist,
ein erstes Ende (E1) der Torsionsfeder (320) mit dem Schuh (316) verbunden ist und
ein zweites Ende (E2) der Torsionsfeder (320) mit einem anderen Teil (312) verbunden ist, der so konfiguriert ist, um sich in der Bootsantriebsvorrichtung (100) zusammen mit dem Schuhstift (314) um die Propellerwelle (136) zu drehen mit dem Schuhstift (314) zu drehen.

11. Die Bootsantriebsvorrichtung (100) gemäß irgendeinem der Ansprüche 2 bis 10, die ferner umfasst:
eine Antriebswelle (132), die so konfiguriert ist, dass sie sich durch die Antriebskraft des Motors (122) dreht, wobei
das Antriebszahnrad (141) so konfiguriert ist, dass es sich gemeinsam mit der Antriebswelle (132) dreht,
die Getriebevorrichtung (140) ferner eine Klauenkupplung (145) umfasst, die zwischen einer Eingriffsposition, in der sie mit dem angetriebenen Zahnrad (142, 143) in Eingriff steht, und einer Ausrückposition, in der sie sich vom angetriebenen Zahnrad (142, 143) entfernt, bewegbar ist und sich gemeinsam mit der Propellerwelle (136) dreht.

12. Die Bootsantriebsvorrichtung (100) gemäß irgendeinem der Ansprüche 2 bis 11, die ferner umfasst:
eine Schuhplatte (326), die mit dem Schuhbolzen (314) verbunden ist.

13. Die Bootsantriebsvorrichtung (100) gemäß irgendeinem der Ansprüche 2 bis 12, die ferner umfasst:
einen Anschlag (324), der zwischen dem ersten Teil (317) und der Abdeckung (302) angeordnet ist.

14. Die Bootsantriebsvorrichtung (100) gemäß irgendeinem der Ansprüche 2 bis 13, die ferner umfasst:
ein Gehäuse (340), das die Abdeckung (302), den Schuhstift (314), den Schuh (316) und das elastische Element (320) aufnimmt, wobei im Inneren des Gehäuses (340) Öl gespeichert ist.

15. Ein Boot (10), das umfasst:
einen Bootskörper (200); und
eine Bootsantriebsvorrichtung (100) gemäß irgendeinem der Ansprüche 2 bis 14, die am hinteren Abschnitt (210) des Bootskörpers (200) angebracht ist.

## Revendications

1. Dispositif de propulsion de bateau (100), comprenant :
un moteur (122) configuré pour générer une force de propulsion;
un arbre (136) configuré pour faire tourner;
un dispositif de transmission (140) configuré pour transmettre la force de propulsion du moteur (122) à l'arbre (136), comprenant:
un pignon menant (141) configuré pour tourner sous l'effet de la force de propulsion du moteur (122); et
un pignon mené (142, 143) qui s'engrène avec le pignon menant (141);
un capot (302) recouvrant la circonférence extérieure de l'arbre (136);
**caractérisé en ce que** le dispositif de transmission (140) comprend en outre:
une goupille de patin (314) qui est disposée entre l'arbre (136) et le capot (302) et qui est configurée pour tourner autour de l'arbre (136) en même temps que la rotation de l'arbre (136);
un patin (316) fixé à la goupille de patin (314) et configuré pour tourner autour de la goupille de patin (314), comprenant:
une première partie (317) située d'un côté de la direction qui coupe la direction radiale de l'arbre (136) par rapport à la goupille de patin (314); et
une seconde partie (318) située de l'autre côté de la direction qui coupe la direction radiale de l'arbre (136) par rapport à la goupille de patin (314), dans laquelle
le centre de gravité (CG) du patin (316) est situé dans la première partie (317); et
un élément élastique (320) qui est agencé pour exercer une force amenant la seconde partie (318) et le capot (302) à entrer en contact l'un avec l'autre.

2. Dispositif de propulsion de bateau (100) selon la revendication 1, dans lequel l'arbre est un arbre d'hélice (136).

3. Dispositif de propulsion de bateau (100) selon la revendication 2, dans lequel la seconde partie (318) est agencée pour s'éloigner du capot (302) lorsque le patin (316) est soumis à une force centrifuge générée par la rotation de l'arbre d'hélice (136).

4. Dispositif de propulsion de bateau (100) selon la revendication 3, dans lequel la seconde partie (318) est configurée pour s'éloigner du capot (302) lorsque la vitesse de rotation du moteur (122) est supérieure à une vitesse de rotation de pêche à la traîne du moteur (122).

5. Dispositif de propulsion de bateau (100) selon l'une quelconque des revendications 2 à 4, dans lequel un axe de rotation (As) du patin (316) est parallèle à un axe de rotation (Ap) de l'arbre d'hélice (136).

6. Dispositif de propulsion de bateau (100) selon l'une quelconque des revendications 2 à 5, dans lequel la seconde partie (318) est pourvue d'un matériau de friction (319) au niveau d'une partie qui est en contact avec le capot (302).

7. Dispositif de propulsion de bateau (100) selon la revendication 6, dans lequel une surface circonférentielle intérieure (302S) du capot (302), vue dans la direction axiale de l'arbre d'hélice (136), est circulaire, et
une surface circonférentielle extérieure (319S) du matériau de friction (319), vue dans la direction axiale de l'arbre d'hélice (136), est arquée.

8. Dispositif de propulsion de bateau (100) selon la revendication 7, dans lequel le matériau de friction (319) présente une surface de contact avec le capot (302), et lorsque le matériau de friction (319) s'éloigne du capot (302) en raison de la rotation du patin (316) autour de la goupille de patin (314), l'ensemble de la surface de contact s'éloigne simultanément du capot (302).

9. Dispositif de propulsion de bateau (100) selon l'une quelconque des revendications 2 à 8, dans lequel le patin (316) comprend un premier métal et un second métal présentant une densité inférieure à celle du premier métal, et
le premier métal est présent en plus grande quantité dans la première partie (317) que dans la seconde partie (318).

10. Dispositif de propulsion de bateau (100) selon l'une quelconque des revendications 2 à 9, dans lequel l'élément élastique est un ressort de torsion (320),
le ressort de torsion (320) est enroulé autour de la goupille de patin (314), une première extrémité (E1) du ressort de torsion (320) est reliée au patin (316), et
une seconde extrémité (E2) du ressort de torsion (320) est reliée à une autre pièce (312) qui est configurée pour tourner autour de l'arbre d'hélice (136) conjointement avec la goupille de patin (314) dans le dispositif de propulsion de bateau (100).

11. Dispositif de propulsion de bateau (100) selon l'une quelconque des revendications 2 à 10, comprenant en outre:
un arbre d'entraînement (132) configuré pour tourner sous l'effet de la force de propulsion du moteur (122), dans lequel
le pignon menant (141) est configuré pour tourner conjointement avec l'arbre d'entraînement (132),
le dispositif de transmission (140) comprend en outre un embrayage à cliquet (145) qui est mobile entre une position d'engagement dans laquelle **il** s'engage avec le pignon mené (142, 143) et une position de désengagement dans laquelle **il** s'éloigne du pignon mené (142, 143), et qui tourne conjointement avec l'arbre d'hélice (136).

12. Dispositif de propulsion de bateau (100) selon l'une quelconque des revendications 2 à 11, comprenant en outre:
une plaque de patin (326) reliée à la goupille de patin (314).

13. Dispositif de propulsion de bateau (100) selon l'une quelconque des revendications 2 à 12, comprenant en outre:
une butée (324) disposée entre la première partie (317) et le capot (302).

14. Dispositif de propulsion de bateau (100) selon l'une quelconque des revendications 2 à 13, comprenant en outre:
un boîtier (340) qui loge le capot (302), la goupille de patin (314), le patin (316) et l'élément élastique (320), de l'huile étant stockée à l'intérieur du boîtier (340).

15. Bateau (10), comprenant:
une coque (200); et
un dispositif de propulsion de bateau (100) selon l'une quelconque des revendications 2 à 14, fixé à la partie arrière (210) de la coque (200).
